# EUROPEAN PATENT APPLICATION

(11) **EP 3 375 275 A1**
(43) Date of publication of application: **19.09.2018**
(21) Application number: 18162317.4
(22) Date of filing: 16.03.2018
(51) Int. Cl.: A01F 11/06

(54) **CORN STRIPPER**

(30) Priority: 16.03.2017 US 201762472400 P
(71) Applicant: Progressive International Corporation, Kent, WA 98032-2358 (US)
(72) Inventor: HAUSER, Lawrence M, Kent, WA Washington 98032 (US)
(74) Representative: Carter, Stephen John

(57) **Abstract**

A corn stripper includes a main body having an upper surface and a pair of opposing side surfaces defining an interior space. A blade is supported by and extends between the opposing side surfaces, the blade forming an arc between the opposing side surfaces. A cover is removably attachable to the main body, the cover enclosing the blade when the cover is attached to the main body, the cover further having an outer surface facing away from the main body when the cover is attached to the main body, the outer surface of the cover having brush attached to and extending away from the cover.

## Description

### PRIORITY CLAIM

This application claims the benefit of U.S. provisional application number 62/472,400, filed March 16, 2017, the contents of which are incorporated by reference.

### FIELD OF THE INVENTION

This application relates to devices for stripping corn kernels from corn cobs.

### BACKGROUND OF THE INVENTION

Preparing raw corn for cooking can be a time consuming and messy process. Currently, many people remove corn from a cob by using a knife, which slices through many or most of the kernels in the process. Other products have been designed specifically for removal of corn kernels, but each is less than satisfactory in one regard or another.

There are a variety of products that have been developed in an effort to solve this long felt need. Some devices are more concerned with slitting open the kernels of corn while removing them from the cob. For example, US Patent No. 5,438,760 to Charlier is directed to a corn slitter that includes a handle with a curved tool head and a plurality of teeth on the tool head. The tool head is forced longitudinally along the cob in the direction of the axis of the handle, with the teeth abrading the kernels as they are separated.

U.S. Patent No. 2,412,149 to Higgins is similar in configuration, with a curved tool head extending longitudinally from an angled handle. In each case, the cutting action is generally in the direction of the handle axis.

U.S. Patent No. 2,173,751 to Burkhart illustrates yet another corn slicer of the type having a tool head extending longitudinally from an angularly offset handle. In the case of the Burkhart patent, the tool head includes blades carried on a frame with a gap between the blades.

Another patent, U.S. No. 1,414,372 to Olcott, depicts an earlier version of this same type of device in which the tool must be pushed in a direction generally in line with the longitudinal axis of the handle. An even earlier patent, U.S. No. 935,517 to Johnson, presents a device that is much the same but in which the handle is pulled in a longitudinal direction rather than pushed.

U.S. Patent Publication 2006/0288582 to Settele describes a corn scraper having an elongate handle and a tool head with a "bridge member" connected to a base plate. The bridge member includes a "tooth means" for engagement with the corn. This arrangement is substantially the same as the Burkhart device, with a blade extending across a frame to form a bridge. The longitudinal axis of the handle is described as being offset from the longitudinal axis of the tool head, much the same way as the angled offset handles of the above prior devices.

Collectively, each of these devices is awkward or inconvenient to use in some respect. Accordingly, there is a long felt but unresolved need for an improved device to remove kernels from a cob of corn.

### SUMMARY OF THE INVENTION

A preferred corn stripper includes a main body having an upper surface and a pair of opposing side surfaces defining an interior space. A blade is supported by and extending between the opposing side surfaces, the blade forming an arc between the opposing side surfaces. A cover is removably attachable to the main body, the cover enclosing the blade when the cover is attached to the main body, the cover further having an outer surface facing away from the main body when the cover is attached to the main body, the outer surface of the cover having brush attached to and extending away from the cover.

In one version, the cover and the main body cooperate to fully enclose the interior space of the main body when the cover is attached to the main body.

In some examples of the invention, the brush comprises an outer surface forming a concave shape.

In some versions, the upper surface of the main body is formed in a convex shape as extends from the forward end to the rearward end of the main body.

In some examples of the invention, each of the opposing side surfaces is configured as a sidewall having an oval perimeter.

The blade preferably is pivotally mounted to a forward end of the main body, and engages a stop surface to limit pivotal movement.

Optionally, a side assembly is mounted to each of the opposing side surfaces, each of the side assemblies having a bearing, wherein the blade is supported by the bearings of the side assemblies.

The opposing side surfaces each may comprise an opening, and further wherein one of the bearings extends through each of the openings.

In some versions, the cover comprises a pair of opposing tabs, each of the tabs having a tongue, and further wherein the main body comprises a pair of grooves, the tongues being receivable within the grooves to retain the cover on the main body.

### BRIEF DESCRIPTION OF THE DRAWINGS

Preferred and alternative examples of the present invention are described in detail below with reference to the following drawings.
Figure 1 is a top perspective view of a preferred corn stripper.
Figure 2 is a bottom perspective view of the preferred corn stripper.
Figure 3 is a front elevational view of the preferred corn stripper.
Figure 4 is a side elevational view of the preferred corn stripper.
Figure 5 is a front elevational view of the main body of the preferred corn stripper.
Figure 6 is a bottom plan view of the main body of the preferred corn stripper.
Figure 7 is a bottom perspective view of the main body of the preferred corn stripper.

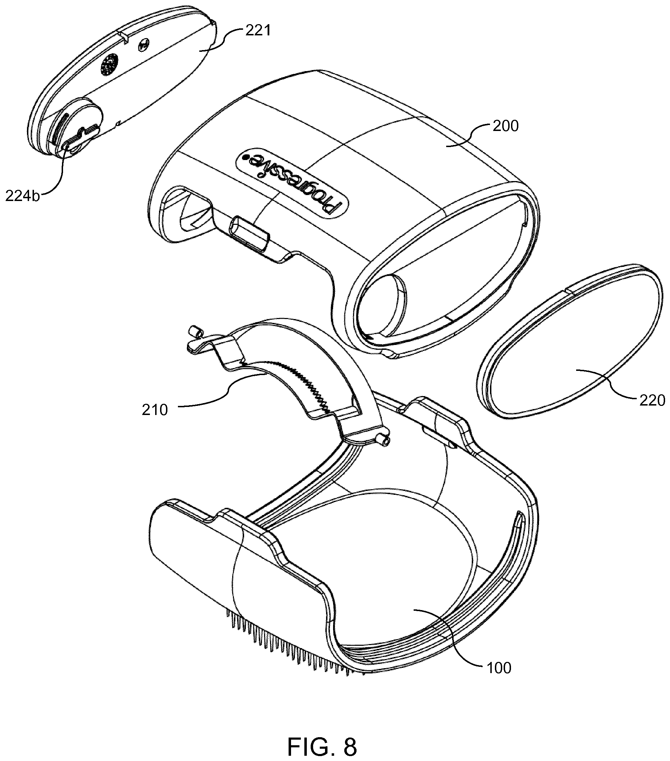

Figure 8 is an exploded view of the preferred corn stripper.
Figure 9 is a top plan view of the main body of the preferred corn stripper.
Figure 10 is a left side elevational view of the main body of the preferred corn stripper.
Figure 11 is a front elevational view of the main body of the preferred corn stripper, with the blade removed.
Figure 12 is a right side elevational view of the main body of the preferred corn stripper.
Figure 13A is an elevational view of a first side assembly of the preferred corn stripper.
Figure 13B is an elevational view of a second side assembly of the preferred corn stripper
Figure 14 is a top perspective view of a cover for the preferred corn stripper.
Figure 15 is a side elevational view of the cover for the preferred corn stripper.
Figure 16 is a bottom perspective view of the cover for the preferred corn stripper.
Figure 17 is a top perspective view of a preferred blade assembly.
Figure 18 is a top plan view of the preferred blade assembly.

### DETAILED DESCRIPTION OF THE PREFERRED EMBODIMENT

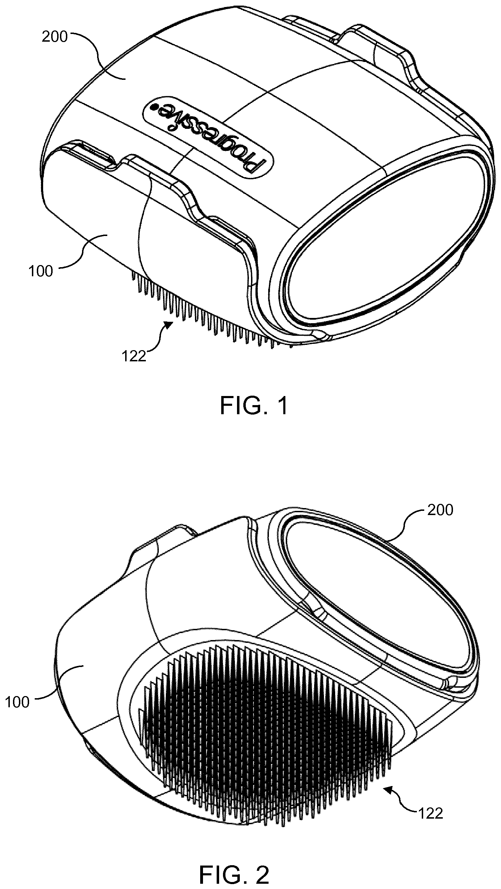

A preferred corn stripper is shown in a top perspective view in Figure 1 and includes a main body 200 and a removable cover 100. Figures 2-4 further show the corn stripper of Figure 1, with the cover secured to the main body. The main body is configured with a blade assembly that is oriented and shaped to remove kernels of corn from a cob. The cover is arranged to surround the internal blade assembly for storage, and preferably includes an external brush 122 for removing silk from a cob.

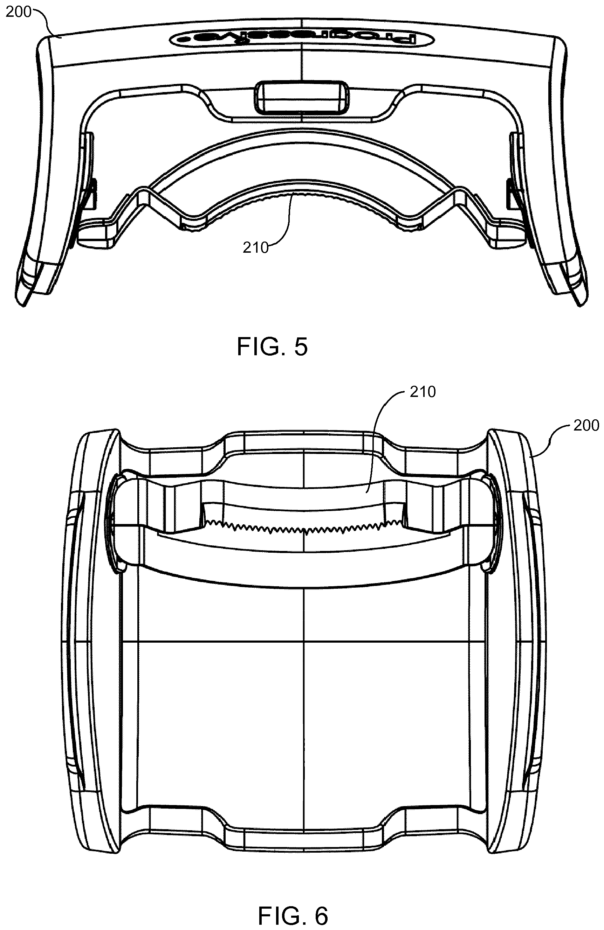

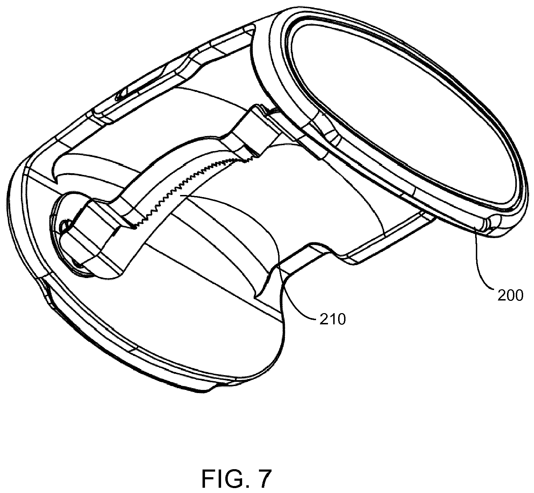

Figures 5-7 show the main body with the cover removed and therefore not illustrated. As illustrated, a blade assembly 201 is mounted to the main body, preferably in a fashion that allows for pivotal movement of the blade assembly within the main body.

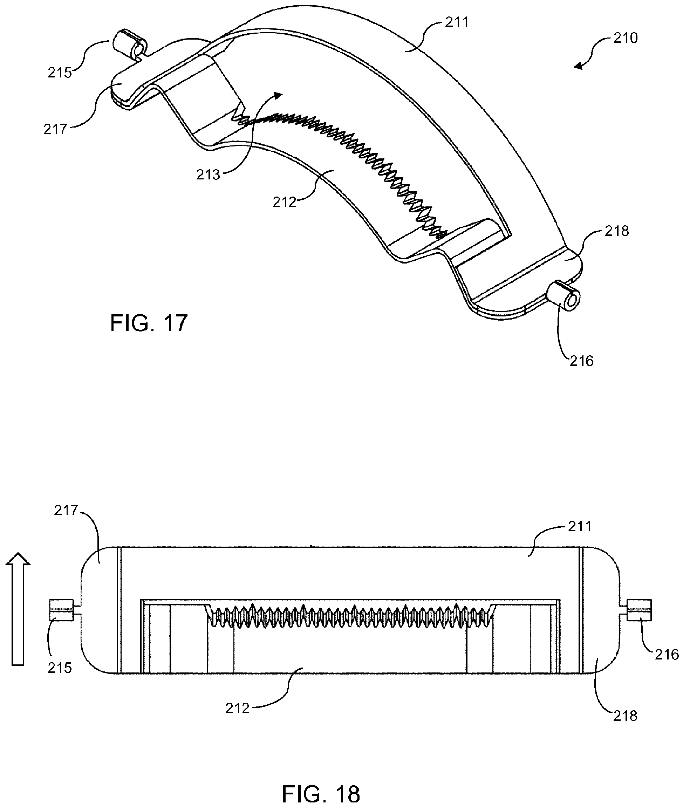

The preferred blade assembly 210 is best seen in Figures 17-18, and includes a guide 211 formed with an arc, and a serrated blade 212 having a complementary arc shape. The guide and blade are joined together at their outer ends to form a consolidated blade assembly, defining an open space 213 between the arcs of the guide and the blade. The width of the open space between the arcs is preferably sized to receive a typical corn kernel, so that as the blade assembly travels along a corn cob the blade cuts the kernels from the cob. Most preferably, the guide is offset from the blade (with the offset being forwardly, with respect to the direction of travel of the corn stripper) as best seen in the top view of the blade assembly, so that when the blade assembly travels along a corn cob in the direction of the arrow in the top view of Figure 18, the guide will slide along the outer surface of the corn kernels prior to cutting by the serrated blade, which slightly trails the guide.

The outer ends of the blade assembly terminate in a pair of opposing stems 215, 216, which serve as axles or pivot points or axles for the blade assembly.

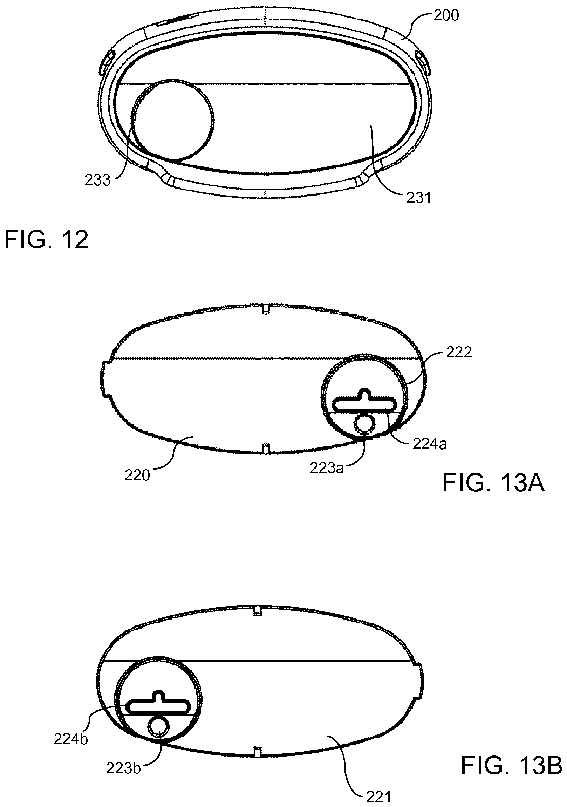

The blade assembly is received and supported by a pair of opposing side assemblies 220, 221 (see Figures 13A, 13B), in which the side assemblies are configured to form outer sidewalls of the main body. In the preferred version, each of the first side assembly 220 and second side assembly 221 is formed with an interior surface having a generally oval perimeter, and includes a raised circular bearing 222a, 222b configured to support one end of the blade assembly. The bearing further includes a mounting cavity 223a, 223b and a stop bar 224a, 224b positioned above the mounting cavity. The second side assembly is configured in the same fashion.

Each one of the stems 215, 216 is received within a corresponding mounting cavity of one of the side assemblies for pivotal movement of the blade assembly within the mounting cavity. The stop bars are preferably formed as a horizontal surface above the mounting cavity, and spaced somewhat above the mounting cavity. Each end of the blade assembly includes a horizontal terminal end 217, 218 adjacent the stems, and positioned between the stems and the blade. Rotational movement of the blade assembly within the side assemblies will cause the horizontal terminal ends to abut the stop bars, thereby allowing pivotal movement but limiting the amount of pivotal movement.

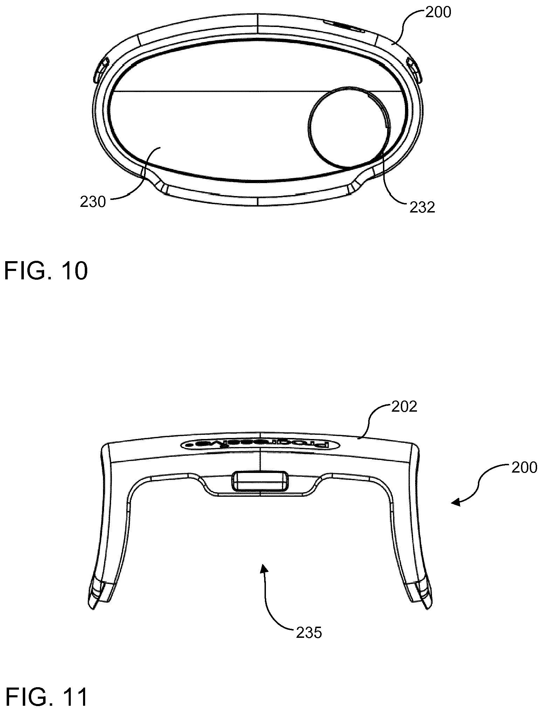

As best seen in Figures 10-12, the main body 200 is configured with an upper surface 202 and opposing side surfaces 230, 231, in which the side surfaces are configured to attach to the side assemblies 220, 221. In the preferred version, the upper surface is in a convex or rounded shape as extends from the forward end to the rearward end. Accordingly, the side surfaces are formed with an oval cross section and include circular openings 232, 233 sized and shaped to receive the raised circular bearings of the side assemblies. The circular bearings therefore are oriented inwardly, facing toward one another and toward the interior space 235 defined by the main body 200. In the illustrated example, the circular openings are positioned at a forward end 204 of the main body, so that the blade assembly will likewise be positioned at the forward end when installed.

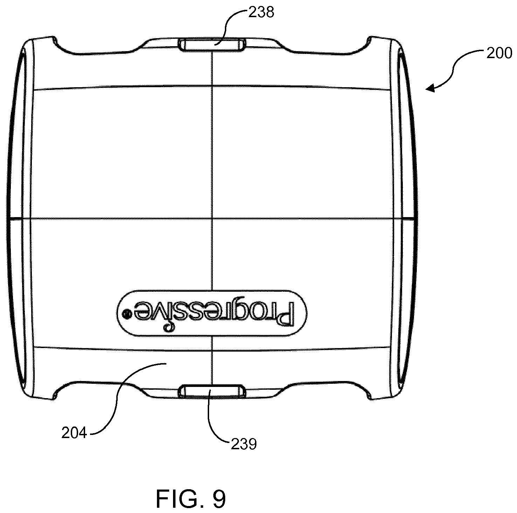

The main body further includes a pair of locking features, which in one version is configured as a pair of grooves 238, 239 (best seen in Figure 9) sized and shaped to receive complementary locking features such as tongues formed in the cover.

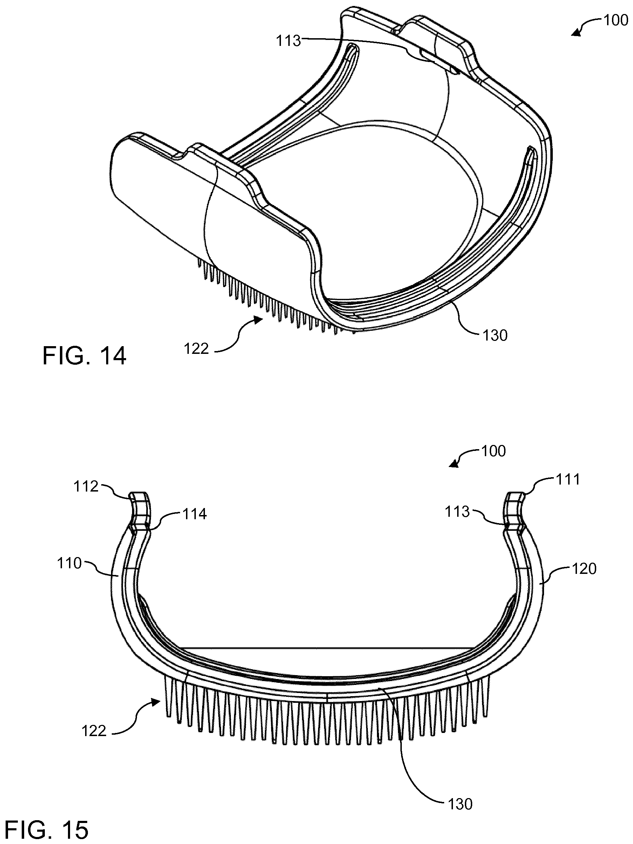

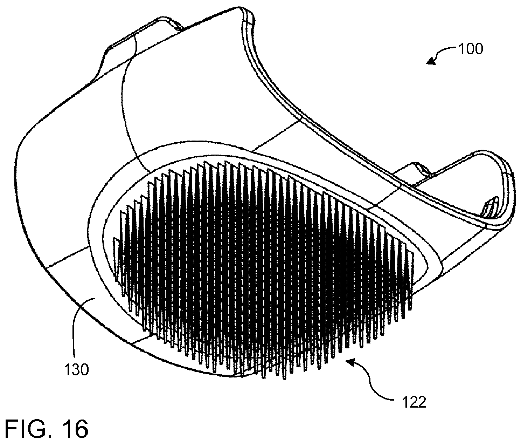

The cover 100 is illustrated separately in Figures 14-16, and is sized and shaped to enclose the open space defined by the main body, and to enclose the blade assembly for storage when not in use. In the illustrated version as best seen in Figure 15, the cover forms a U-shape when viewed from the side (and is therefore complementary to the inverted U-shape of the main body, as viewed from the front). Each of the uprights of the U-shape forms an upper sidewall 110, 120. At the uppermost ends, the sidewalls terminate in a tab 111, 112, with a tongue 113, 114 positioned just below the uppermost end of the tab. The tongues are configured to be received within the grooves of the main body, as discussed above, to lock the cover to the main body. The tabs facilitate grasping by a user to pry the tongues from the grooves in order to remove the cover from the main body.

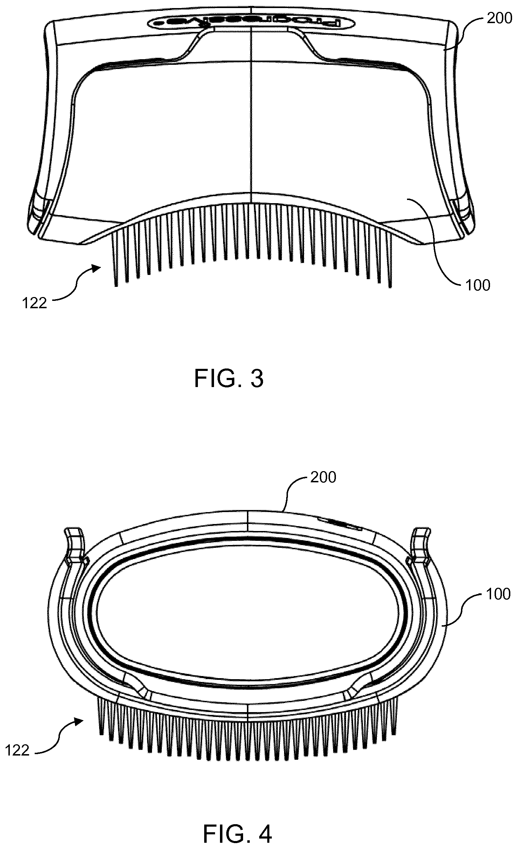

The lower surface 130 of the cover, between the sidewalls, is preferably formed with a brush 122, which can be used to brush the silk from the cob before cutting. In the preferred version, the lower surface is formed with a concave shape (as viewed from the front, as best seen in Figure 3), most preferably configured to receive the rounded outer surface of a typical corn cob against the bristles. Similarly, the outer surface of the brush, defined by the plurality of bristles, is formed with a corresponding concave shape.

The cover is configured to mate with the main body to enclose the interior space of the main body, and to surround the blade assembly for storage. In use, the brush of the main body can be used to remove excess silk from a cob of corn while the cover is attached to the main body. Then when the cob is prepared, the cover is removed to expose the blade assembly. The user can then pull the blade assembly and the main body along the length of a cob, pressing it against the cob and with the guide serving as the leading edge and the blade as the trailing edge. In this fashion, with several passes of the blade along the cob, the kernels can be removed from the cob.

While the preferred embodiment of the invention has been illustrated and described, as noted above, many changes can be made without departing from the spirit and scope of the invention. Accordingly, the scope of the invention is not limited by the disclosure of the preferred embodiment. Instead, the invention should be determined entirely by reference to the claims.

## Claims

1. A corn stripper, comprising:
a main body having an upper surface and a pair of opposing side surfaces defining an interior space;
a blade supported by and extending between the opposing side surfaces, the blade forming an arc between the opposing side surfaces; and
a cover removably attachable to the main body, the cover enclosing the blade when the cover is attached to the main body, the cover further having an outer surface facing away from the main body when the cover is attached to the main body, the outer surface of the cover having brush attached to and extending away from the cover.

2. The corn stripper of claim 1, wherein the cover and the main body cooperate to fully enclose the interior space of the main body when the cover is attached to the main body.

3. The corn stripper of claim 2, wherein the brush comprises an outer surface forming a concave shape.

4. The corn stripper of claim 2, wherein the upper surface of the main body is formed in a convex shape as extends from the forward end to the rearward end of the main body.

5. The corn stripper of claim 4, wherein each of the opposing side surfaces is configured as a sidewall having an oval perimeter.

6. The corn stripper of claim 2, wherein the blade is pivotally mounted to a forward end of the main body.

7. The corn striper of claim 2, further comprising a side assembly mounted to each of the opposing side surfaces, each of the side assemblies having a bearing, wherein the blade is supported by the bearings of the side assemblies.

8. The corn stripper of claim 7, wherein the opposing side surfaces each comprise an opening, and further wherein one of the bearings extends through each of the openings.

9. The corn stripper of claim 2, wherein the cover comprises a pair of opposing tabs, each of the tabs having a tongue, and further wherein the main body comprises a pair of grooves, the tongues being receivable within the grooves to retain the cover on the main body.
